(19) Europäisches Patentamt
European Patent Office
Office européen des brevets

(11) **EP 2 989 369 B1**

(12) **EUROPÄISCHE PATENTSCHRIFT**

(45) Veröffentlichungstag und Bekanntmachung des Hinweises auf die Patenterteilung:
**17.07.2019   Patentblatt 2019/29**

(21) Anmeldenummer: **14717763.8**

(22) Anmeldetag: **15.04.2014**

(51) Int Cl.:
***F16P 3/14*** *(2006.01)*

(86) Internationale Anmeldenummer:
**PCT/EP2014/057572**

(87) Internationale Veröffentlichungsnummer:
**WO 2014/173725 (30.10.2014 Gazette 2014/44)**

(54) **VORRICHTUNG UND VERFAHREN ZUM ABSICHERN EINER AUTOMATISIERT ARBEITENDEN MASCHINE**

APPARATUS AND METHOD FOR SAFEGUARDING AN AUTOMATICALLY OPERATING MACHINE

DISPOSITIF ET PROCÉDÉ DE SÉCURISATION D'UNE MACHINE TRAVAILLANT DE MANIÈRE AUTOMATISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2013   DE 102013104265**

(43) Veröffentlichungstag der Anmeldung:
**02.03.2016   Patentblatt 2016/09**

(73) Patentinhaber: **Pilz GmbH & Co. KG**
**73760 Ostfildern (DE)**

(72) Erfinder: **MERX, Joachim**
**73760 Ostfildern (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 2 386 876        EP-A1- 2 395 274**
**EP-A1- 2 685 150        EP-A2- 0 179 252**
**DE-A1-102004 041 821    DE-A1-102009 050 850**
**JP-A- 2010 208 002      JP-A- 2012 223 831**

**Beschreibung**

Die vorliegende Erfindung betrifft gemäß des Oberbegriffs des Anspruchs 1 eine Vorrichtung zum Absichern eines Überwachungsbereichs, in welchem eine automatisiert arbeitende Maschine angeordnet ist, mit einer Sensoreinheit zur Überwachung des Überwachungsbereichs, wobei die Sensoreinheit ein Kamerasystem aufweist, das auf den Überwachungsbereich ausgerichtet ist, mit einer Konfigurationseinheit, und mit einer Auswerteeinheit zum Auslösen einer sicherheitsrelevanten Funktion.

Eine solche gattungsgemäße Vorrichtung gemäß des Oberbegriffs des Anspruchs 1 ist aus der JP 2012-223831 A bekannt. Eine weitere beispielhafte Vorrichtung zur Sicherung eines maschinell gesteuerten Handhabungsgerätes ist aus der DE 10 2004 041 821 A1 bekannt.

Die vorliegende Erfindung betrifft ferner ein entsprechendes Verfahren zum Absichern eines Überwachungsbereichs, in welchem eine automatisiert arbeitende Maschine angeordnet ist.

Bei modernen Industrierobotern, die sich mit erheblichen Geschwindigkeiten bewegen, führen Kollisionen in der Regel zu ernsthaften Schäden, sowohl an den Robotern als auch an dem von diesen gehandhabten Werkstücken. Dies kann zu kostspieligen Produktionsausfällen führen. Auch hat die Sicherheit von Personen, welche mit den automatisiert arbeitenden Robotern interagieren, höchste Priorität. Bei modernen Industrierobotern und anderen Maschinen mit bewegten Maschinenelementen, deren Bewegung eine Gefahr für Personen und andere Objekte darstellen, muss deshalb durch Schutzeinrichtungen verhindert werden, dass es zu einer Kollision zwischen den bewegten Maschinenelementen und einem Fremdobjekt kommt. Dazu ist es meist ausreichend, die Maschine zum Stillstand zu bringen, bevor ein ungewollter Kontakt erfolgt.

Traditionell werden Gefahrenbereiche um automatisiert arbeitende Maschinen herum mit mechanischen Absperrungen in Form von Schutzzäunen und Schutztüren und/oder mit Hilfe von Lichtschranken, Lichtgittern und Laserscannern abgesperrt. Sobald eine Person eine Schutztür öffnet oder ein Lichtgitter oder eine Lichtschranke unterbricht, wird ein Abschaltsignal erzeugt, mit dem die gefährliche Arbeitsbewegung der Maschine angehalten wird. Die Installation derartiger Schutzeinrichtungen ist allerdings recht aufwendig und die Schutzeinrichtungen benötigen viel Platz, um eine gefährliche Maschine herum. Außerdem sind derartige Schutzeinrichtungen wenig flexibel, wenn es darum geht, die Absicherung des gefährlichen Arbeitsbereichs an unterschiedliche Betriebssituationen der Maschine anzupassen.

Um diese Nachteile zu vermeiden, gibt es seit einiger Zeit Bemühungen, die Absicherung des gefährlichen Arbeitsbereichs einer automatisiert arbeitenden Maschine mit Hilfe von Kamerasystemen und geeigneter Bildverarbeitung zu realisieren. Ein solches System wird von der Anmelderin unter dem Namen SafetyEYE vertrieben.

Die EP 1 543 270 B1 beschreibt ein solches System mit zumindest zwei Kameras, die zyklisch Bilder von dem gefährlichen Arbeitsbereich liefern. Die Bilder der Kameras werden mit zumindest zwei algorithmisch unterschiedlichen Verfahren analysiert, wobei die gefährliche Arbeitsbewegung der Maschine angehalten wird, wenn zumindest eines der beiden Verfahren eine Fremdobjektdetektion in einem zuvor definierten Schutzbereich liefert. Jedes der beiden Analyseverfahren erzeugt 3D-Informationen aus den Bildern der Kameras, so dass mit Hilfe der Verfahren die Position von Objekten in dem definierten Schutzbereich festgestellt werden kann. Eine große Herausforderung an solchen Verfahren und Vorrichtungen besteht darin, dass die ohnehin schon komplexe Bildverarbeitung fehlersicher im Sinne einschlägiger Normen zur Maschinensicherheit realisiert sein muss, insbesondere EN 954-1 (veraltet), EN ISO 13849-1, IEC 61508 und EN ISO 13855, damit eine solche Vorrichtung tatsächlich auch zur Absicherung einer gefährlichen Maschine eingesetzt werden kann. Ein Versagen der Vorrichtung selbst darf nicht dazu führen, dass die Absicherung der Maschine verlorengeht. Als fehlersicher in diesem Sinne gilt im Folgenden daher eine Vorrichtung, die zumindest die Kategorie 3 gemäß EN 954-1, SIL 2 gemäß IEC 61508 und /oder den Performancelevel PL (d) gemäß EN ISO 13849 erreicht. Das aus der EP 1 543 270 B1 bekannte Verfahren und eine entsprechende Vorrichtung können dies leisten und haben sich in praktischen Einsätzen bereits bewährt.

Ein bei oben genannter Thematik vermehrt auftretender Wunsch besteht in einer Verbesserung der Mensch-Maschine-Interaktion. Der Fokus liegt dabei meist darauf, die Sicherheitssysteme derart weiterzuentwickeln, dass diese ein Arbeiten von Menschen in unmittelbarer Nachbarschaft einer gefährlichen Maschine erlauben, ohne dass dies eine Gefahr für die Menschen birgt, aber auch ohne dass die Maschinen aufgrund der sich unmittelbar in deren Nähe aufhaltenden Menschen allzu oft ungewollt abgeschaltet wird. Beispielsweise ist es wünschenswert, dass sich ein Mensch in der prinzipiell gefährlichen Umgebung eines Roboters aufhalten kann, während der Roboter arbeitet, um die Bearbeitungsprozesse des Roboters vor Ort zu überwachen oder um ein Werkstück gleichzeitig oder wechselweise mit dem Roboter zu bearbeiten. Trotzdem muss weiterhin sichergestellt sein, dass der Mensch durch Arbeitsbewegungen des Roboters nicht verletzt wird.

Bei den oben genannten Kamera-basierten Sicherheitssystemen werden um die Maschine herum meist virtuelle Schutzbereiche definiert. Das Kamerasystem detektiert dann, ob ein Fremdobjekt in einen solchen Schutzbereich eindringt und schaltet daraufhin dann die Maschine ab oder bringt diese in einen sicheren Zustand. Um eine ausreichende Sicherheit garantieren zu können, werden die Schutzbereich dazu in einem relativ großen Abstand um die Maschinen herum definiert. Die einzuhaltenden Sicherheitsabstände beruhen auf den Normen EN ISO 13855: 2010 und EN ISO 13857:2008.

Die allgemeine Formel zur Berechnung des Mindestabstands lautet:

$$S = K \cdot (t_1 + t_2) + C + Z_g$$

wobei gilt:

S = Mindestabstand in mm gemessen vom Beginn des Schutzbereichs bis zur Gefahrenquelle;

K = Annäherungsgeschwindigkeit, mit der sich das zu erfassende Objekt dem Gefahrenbereich nähert in mm/s (für oben genannte Kamerabasierte Sicherheitssysteme wird dies meist mit K = 1600 mm/s angenommen);

$t_1$ = Reaktionszeit des Sicherheitssystems (für oben genannte Kamerabasierte Sicherheitssysteme wird dies meist mit $t_1$ = 0,34 s angenommen);

$t_2$ = Reaktionszeit der Maschine (z.B. Roboter, angenommen mit 0,7 s);

$Z_g$ = Zuschlag für Messtoleranz des Sicherheitssystems;

C = Eindringtiefe. Diese wird definiert als Abstand um den sich ein Körperteil an der Schutzeinrichtung vorbei in Richtung des Gefährdungsbereichs bewegen kann, bevor die Schutzeinrichtung ausgelöst wird.

Eine beispielhaft, realistische Berechnung des Sicherheitsabstands bei den oben genannten Kamera-basierten Sicherheitssystemen würde demnach ergeben:

$$
\begin{aligned}
S \ &= \ K \cdot (t_1 + t_2) + C + Z_g \\
&= \ 1600 \text{ mm/s} \cdot (0{,}34 \text{ s} + 0{,}7 \text{ s}) + 850 \text{ mm} + 316 \text{ mm} \\
&= \ 2{,}83 \text{ m}
\end{aligned}
$$

Dieser Sicherheitsabstand wird üblicherweise von dem maximal zu erreichenden Arbeitsbereich des Roboters ausgemessen, sofern dieser über keinen mechanischen Anschlag verfügt. Dies bedeutet, dass der Sicherheitsbereich den Roboter relativ weiträumig umgibt. Behält man im Hinterkopf, dass die meisten Roboter ihren maximal möglichen Arbeitsbereich in der Praxis tatsächlich nur sehr selten ausnutzen, erscheint eine Zahl von 3 m ausgehend von dem maximal zu erreichenden Arbeitsbereich des Roboters als noch großzügiger bzw. größer. Zwar lässt sich dadurch der geforderte Sicherheits-Level garantieren, jedoch nimmt dies immens viel Platz ein. Die würde somit auch ein Aufstellen mehrerer Roboter nebeneinander auf relativ geringem Raum erschweren, was sich insbesondere in Produktionshallen mit mehreren derartigen Robotern als nachteilhaft erweist. Es wäre daher grundsätzlich wünschenswert, die räumliche Ausdehnung der virtuellen Schutzbereiche etwas einschränken zu können, ohne dass dies die zu garantierende Sicherheit beeinträchtigt.

Die DE 10 2007 007 576 A1 schlägt ein Verfahren und eine Vorrichtung zum Absichern des gefährlichen Arbeitsbereichs eines Roboters vor, wobei ein 3D-Bild von dem Arbeitsbereich erstellt und einer Person, die sich innerhalb des Arbeitsbereichs aufhält, ein kinematisiertes Menschenmodell zugeordnet wird. Das 3D-Bild wird dahingehend analysiert, ob der Ist-Zustand des Arbeitsbereichs von einem Soll-Zustand des Arbeitsbereichs abweicht, wobei die Soll-Positionen der Person über das kinematisierte Menschenmodell berücksichtigt wird. Dieses Verfahren und die entsprechende Vorrichtung sollen eine Mensch-Roboter-Kollaboration ermöglichen. Aufgrund des Soll-Ist-Vergleichs muss sich eine Person im Arbeitsbereich des Roboters allerdings genauso bewegen, wie es dem Soll-Zustand in dem kinematisierten Menschenmodell entspricht. Eine entsprechende Modellbildung erscheint aufwendig, und sie begrenzt in jedem Fall die Flexibilität, da eine Anpassung an neue Betriebssituationen jeweils eine neue Modellbildung erfordert. Darüber hinaus schlägt die DE 10 2007 007 576 A1 zwar die Verwendung von Scannern als Sensoreinheiten vor, die eine Einfehlersicherheit gemäß Kategorie 3 der EN 954-1 aufweisen. Ferner wird eine zyklische oder kontinuierliche Überprüfung der Funktionstüchtigkeit der Sensoreinheiten vorgeschlagen, und die Bewegung des Roboters während der Überprüfungsphase sollen in sicherer Technik überwacht werden, wie z.B. durch redundante Erfassung und Auswertung der Achsstellungen des Robotersystems. Die DE 10 2007 007 576 A1 enthält jedoch keinen Hinweis darauf, dass die Auswertung der 3D-Bilder und die zugrundeliegende Modellbildung die für eine Absicherung von gefährlichen Arbeitsbereichen erforderliche Fehlersicherheit bieten können.

Die EP 1 635 107 A1 nähert sich dem Problem, möglichst kleine Schutzbereiche zu definieren, dadurch dass eine Auswerteeinheit zum Festlegen eines Gefahrenbereichs mit der Maschinensteuerung der Maschine gekoppelt ist, und dass die Auswerteeinheit zum Ableiten der für die Festlegung des Gefahrenbereichs erforderlichen Parameter aus den von der Maschinensteuerung zur Bewegungssteuerung der Maschine verwendeten Steuersignalen ausgebildet ist. Die für die Festlegung des Gefahrenbereichs erforderlichen Parameter werden also basierend auf den für die Maschinensteuerung verwendeten Parametern (z.B. Position, Bewegungsgeschwindigkeit und Bewegungsrichtung des Roboterarms) festgelegt. Der Gefahrenbereich wandert also dynamisch, d.h. mit dem Roboterarm mit. Die Maschine selbst ist per Definition dabei immer innerhalb des Gefahrenbereichs angeordnet. Eine solche dynamische Festlegung des Gefahren- bzw. Schutzbereichs wäre unter Idealbedingungen relativ platzsparend. Allerdings ist die Umsetzung einer solchen dynamischen Festlegung des Schutzbereichs in der Praxis nicht nur sehr komplex, sie erfordert auch einen hohen Rechneraufwand. Des Weiteren erscheint es zweifelhaft, ob ein derart eng bemessener Schutzbereich (direkt um die abzusichernde Maschine herum) in der Praxis den geforderten Sicherheits-Level garantieren kann. Im Übrigen eignet sich das in der EP 1 635 107 A1 beschriebene Verfahren und die zugehörige Vorrichtung nur für fehlersichere Maschinen bzw. Roboter. Das heißt., die Maschinensteuerung selbst sollte fehlersicher und redundant ausgelegt sein. Das Verfahren und die Vorrichtung eignen sich jedoch nicht für nicht-sichere Roboter bzw. Maschinen. Das Verfahren und die Vorrichtung setzen nämlich voraus, dass sich die Maschine bzw. der Roboter tatsächlich auch entsprechend der programmierten Maschinensteuerung bewegt. Ein Fehlverhalten der Maschine bzw. des Roboters ist jedenfalls nicht über den Kamera-basierten Überwachungs-Sensor detektierbar.

Vor diesem Hintergrund ist es eine Aufgabe der vorliegenden Erfindung, eine Vorrichtung und ein Verfahren der eingangs genannten Art anzugeben, die auf möglichst einfache und effiziente Art und Weise den flexiblen Aufenthalt von Personen in dem gefährlichen Bereich einer automatisiert arbeitenden Maschine ermöglichen, wobei die für eine solche Anwendung erforderliche Absicherung der Maschine und die erforderliche Fehlersicherheit gewährleistet sind. Insbesondere soll dabei der Sicherheitsabstand zwischen der Maschine und dem einzurichtenden Schutzbereich gegenüber der bisher normierten Sicherheitsabstandberechnung verringert werden können, ohne dass dadurch die Sicherheit für Mensch und Maschine beeinträchtigt wird.

Gemäß einem ersten Aspekt der Erfindung wird diese Aufgabe durch eine Vorrichtung der eingangs genannten Art dadurch gelöst, die Konfigurationseinheit zur Definition von zumindest einem ersten und einem zweiten Schutzbereich eingerichtet ist, wobei der erste Schutzbereich einen ersten Abstand von der Maschine hat, und der zweite Schutzbereich einen zweiten, größeren Abstand von der Maschine hat als der erste Schutzbereich, dass die Sensoreinheit beide Schutzbereiche überwacht, dass die Sensoreinheit ein Kamerasystem aufweist, das auf den Überwachungsbereich ausgerichtet ist, und dass die Auswerteeinheit die von dem Kamerasystem erzeugten Kamerabilder sowohl dahingehend auswertet, ob ein Maschinenelement der Maschine in den ersten Schutzbereich eindringt, als auch dahingehend auswertet, ob ein Fremdobjekt in den zweiten Schutzbereich eindringt, und dazu eingerichtet ist, die sicherheitsrelevante Funktion auszulösen, wenn zumindest eines dieser Ereignisse eintritt.

Gemäß einem weiteren Aspekt der vorliegenden Erfindung wird diese Aufgabe durch ein Verfahren der eingangs genannten Art gelöst, mit den Schritten:

- Bereitstellen einer Sensoreinheit zur Überwachung des Überwachungsbereichs, wobei die Sensoreinheit ein Kamerasystem aufweist, das auf den Überwachungsbereich ausgerichtet ist,

- Definition von zumindest einem ersten und einem zweiten virtuellen Schutzbereich, wobei der erste Schutzbereich einen ersten Abstand von der Maschine hat, und der zweite Schutzbereich einen zweiten, größeren Abstand von der Maschine hat als der erste Schutzbereich,

- Überwachung beider Schutzbereiche mit der Sensoreinheit,

- Auswerten der von dem Kamerasystem erzeugten Kamerabilder, um zu detektieren, ob ein Maschinenelement der Maschine in den ersten Schutzbereich eindringt, und ob ein Fremdobjekt in den zweiten Schutzbereich eindringt, und

- Auslösen einer sicherheitsrelevanten Funktion, wenn detektiert wird, dass ein Maschinenelement der Maschine in den ersten Schutzbereich eindringt und/oder ein Fremdobjekt in den zweiten Schutzbereich eindringt.

Besonders vorteilhaft ist es, wenn das neue Verfahren und die neue Vorrichtung mit Hilfe eines Computerprogrammprodukts mit Programmcode realisiert werden, der dazu ausgebildet ist, das genannte Verfahren auszuführen, wenn der Programmcode auf der Auswerteeinheit ausgeführt wird. Dementsprechend ist die Konfigurationseinheit in diesem bevorzugten Ausführungsbeispiel in Form eines Softwaremoduls realisiert, das in der Auswerteeinheit ausgeführt wird. Es versteht sich, dass in diesem Fall das Bereitstellen der Sensoreinheit zur Überwachung des Überwachungsbereichs nicht zwingend notwendigerweise Teil des Programmcodes ist.

Die neue Vorrichtung und das neue Verfahren zeichnen sich insbesondere dadurch aus, dass zwei voneinander beabstandete Schutzbereiche definiert werden. Im Gegensatz zu der sonst üblichen Herangehensweise, bei der man sich mit Hilfe der definierten Schutzbereiche im Wesentlichen auf die Detektion von Fremdobjekten fokussiert, welche sich dem Arbeitsbereich der Maschine nähern, überwacht hier ein Schutzbereich (der erste Schutzbereich) die Maschine selbst, wohingegen der andere Schutzbereich (der zweite Schutzbereich) zur Detektion von Fremdobjekten (z.B. Menschen) dient, welche sich der Maschine nähern. Die neue Vorrichtung überwacht also den Überwachungsbereich beidseitig, nämlich ausgehend von der Maschine, ob Teile der Maschine selbst sozusagen von innen in den ersten Schutzbereich eindringen, als auch ausgehend von der Umgebung der Maschine, ob Fremdobjekte sozusagen von außen in den zweiten Schutzbereich eindringen. Durch diese beidseitige Betrachtungsweise lässt sich also auch detektieren, ob die Maschine selbst ihren üblichen Arbeitsbereich unbeabsichtigt verlässt. In diesem Fall würden nämlich Teile der Maschine, hier als Maschinenelemente bezeichnet, in den ersten Schutzbereich eindringen, wodurch dann die sicherheitsrelevante Funktion durch die Auswerteeinheit ausgelöst wird.

Ein wesentlicher Vorteil der neuen Vorrichtung besteht darin, dass diese sich, insbesondere aufgrund der zusätzlichen externen Überwachung der Maschine, auch für "nicht-sichere" Maschinen bzw. Roboter einsetzen lässt. Automatisiert arbeitende Maschinen, welche selbst nicht redundant und sicher im oben genannten Sinne ausgeführt sind, lassen sich durch die Vorrichtung nun zusätzlich absichern. Im Zweifel noch wichtiger ist jedoch, dass sich der Abstand der virtuell definierten Schutzbereiche von der Maschine, insbesondere der zweite Abstand des zweiten Schutzbereichs von der Maschine, gegenüber bekannten Sicherheitssystemen dieser Art verringern lässt. Dies ermöglicht es insbesondere bei Produktionsstraßen mit mehreren nebeneinander angeordneten, automatisiert arbeitenden Maschinen, die Maschinen in relativ geringem Abstand voneinander anzuordnen, da sich der abgesicherte Überwachungsbereich jeder einzelnen Maschine insgesamt verkleinern lässt. Dies vereinfacht auch die Mensch-Maschine-Kooperation. Üblicherweise wird der Sicherheitsabstand S, wie oben bereits erläutert, gemäß den Normen EN ISO 13855:2010 und EN ISO 13857:2008 ausgehend von dem maximal möglichen Arbeitsbereich der Maschine aus gemessen (sofern diese über keinen mechanischen Anschlag verfügt). Da nun jedoch mit Hilfe der Vorrichtung die Maschine zusätzlich überwacht wird und es detektiert wird, ob die Maschine in den um diese angeordneten ersten Schutzbereich eindringt, lässt sich der erste Schutzbereich und damit auch der zweite Schutzbereich in geringerem Abstand zu der Maschine anordnen.

Der erste Schutzbereich ist vorzugsweise in Abhängigkeit eines tatsächlich programmierten Arbeitsbereichs der Maschine definiert. Die Reduzierung des Sicherheitsabstandes gegenüber der oben genannten, normgerechten Sicherheitsabstandsberechnung beruht also darauf, dass zusätzlich zu dem äußeren Schutzbereich (2. Schutzbereich), welcher das Eindringen von Fremdobjekten detektiert, der im vorliegenden genannte erste Schutzbereich an den Grenzen des programmierten Arbeitsbereichs der Maschine definiert wird. Dieser erste Schutzbereich hat die Aufgabe den programmierten Arbeitsbereich der Maschine auf Einhaltung zu überwachen. Sollte die Maschine nun durch einen Fehler im System oder aber auch durch eine Änderung ihrer Programmierung ohne Anpassung des Sicherheitsabstandes diesen programmierten Arbeitsbereich verlassen, so würde auch dann die Auswerteeinheit die sicherheitsrelevante Funktion auslösen, was zumeist entweder ein Abschalten der Maschine zur Folge hat oder diese in einen sicheren Zustand bringt.

Nicht zu verwechseln sind die beiden hier definierten Schutzbereiche mit den in der EP 1 635 107 A1 genannten Gefahrenbereichen ersten und zweiten Grades. Die darin genannten Gefahrenbereiche dienen nämlich nicht der Überwachung der Maschine selbst, sondern beziehen sich beide auf die Außensicht, um ein Herannahen von Fremdobjekten von außen an die Maschine zu detektieren. Der in der EP 1 635 107 A1 definierte Gefahrenbereich ersten Grades definiert einen Bereich relativ niedriger Gefährdung, bei dessen Durchdringen durch ein Fremdobjekt ein akustisches oder optisches Warnsignal ausgelöst wird. Der näher an der Maschine liegende Gefahrenbereich zweiten Grades definiert einen Bereich größerer Gefährdung, dessen Durchdringen durch ein Fremdobjekt den vollständigen Stillstand der Maschine auslöst. Die EP 1 635 107 A1 verwendet sozusagen ein Zwei-Stufen-Modell, was sich jeweils aber nur auf die Außenbetrachtung fokussiert, nicht aber überprüft, ob die Maschine selbst ihren programmierten Arbeitsbereich verlässt.

Im Gegensatz zu der aus der EP 1 635 107 A1 bekannten Vorrichtung lässt sich die erfindungsgemäße Vorrichtung daher auch für nicht-sichere Maschinen verwenden. Die Definition der beiden Schutzbereiche lässt sich im Übrigen auch sehr viel einfacher und unkomplizierter realisieren als dies in der EP 1 635 107 A1 der Fall ist.

Die oben genannte Aufgabe ist daher vollständig gelöst.

In einer bevorzugten Ausgestaltung der Erfindung ist der erste Schutzbereich in Abhängigkeit eines tatsächlich programmierten Arbeitsbereichs der Maschine definiert und der zweite Schutzbereich in Abhängigkeit des ersten Schutzbereichs definiert. Die Differenz zwischen dem zweiten und dem ersten Abstand entspricht einem definierten Sicherheitsabstand.

Der Sicherheitsabstand S wird also nicht wie sonst üblich ausgehend von der maximalen Reichweite der Maschine (maximaler Raum) definiert, sondern ausgehend von dem tatsächlich programmierten Arbeitsbereich der Maschine (Betriebsraum). In dem eingangs erwähnten Rechenbeispiel wurde ein Sicherheitsabstand S = 2,83 m berechnet. Aufgrund der zusätzlichen Absicherung der Maschine durch den ersten Schutzbereich kann dieser Sicherheitsabstand S ausgehend von dem Betriebsraum definiert werden, und nicht wie sonst üblich ausgehend von dem maximalen Raum der Maschine. Der außenliegende zweite Schutzbereich lässt sich somit in einem Gesamtabstand vom Mittelpunkt der Maschine anordnen, welcher der Summe aus programmierter Auslenkung der Maschine und dem Sicherheitsabstand S entspricht. Diese Umsetzung hat gegenüber der üblichen Vorgehensweise eine Reduzierung des Gesamtabstandes des zweiten Schutzbereichs von der Maschine um die Differenz: "Maximaler Arbeitsbereich der Maschine (maximaler Raum)" - "programmierter Arbeitsbereich der Maschine (Betriebsraum)" zur Folge.

Der erster Abstand ist dabei als Abstand zwischen der Maschine und einer innenliegenden Grenze des ersten Schutzbereichs definiert. Der sogenannte zweite Abstand ist hingegen zwischen der Maschine und einer außenliegenden Grenze des zweiten Schutzbereichs definiert. Unter innenliegenden Grenzen werden Teile der jeweiligen Schutzbereiche verstanden, welche von der Maschine aus betrachtet dieser zugewandt sind, also im Gegensatz zu der außenliegenden Grenze des jeweiligen Schutzbereichs einen geringeren Abstand von der Maschine an der jeweiligen Stelle haben. Dementsprechend werden unter außenliegenden Grenzen Teile der jeweiligen Schutzbereiche verstanden, welche von der Maschine aus betrachtet von dieser abgewandt sind, also im Gegensatz zu der innenliegenden Grenze des jeweiligen Schutzbereichs einen größeren Abstand von der Maschine an der jeweiligen Stelle haben. Die jeweiligen Schutzbereiche spannen sich also zwischen ihren innenliegenden und außenliegenden Grenzen auf. Die Breite oder Dicke der Schutzbereiche, also der Abstand zwischen der innen- und außenliegenden Grenze des jeweiligen Schutzbereichs, ist vorzugsweise systemabhängig definiert. Sie hängt unter Anderem von der Reaktionszeit des Sensors sowie von der Reaktionszeit des Auswerteprozesse ab. Der Grund weshalb sich der zweite Abstand auf die außenliegende Grenze des zweiten Schutzbereichs bezieht, und der erste Abstand sich im Gegensatz dazu auf die innenliegende Grenze des ersten Schutzbereichs bezieht, sollte vor dem Hintergrund oben genannter Ausführungen einleuchtend sein. Der zweite Schutzbereich dient der Überwachung "von Außen", weshalb es insbesondere auf dessen außenliegende Grenze ankommt. Der erste Schutzbereich dient der Überwachung "von Innen", weshalb es insbesondere auf dessen innenliegende Grenze ankommt.

In einer weiteren bevorzugten Ausgestaltung ist der definierte Sicherheitsabstand zumindest abhängig von einer geschätzten Annäherungsgeschwindigkeit eines sich an die Maschine annähernden Fremdobjekts, von einer Abschaltzeit der Maschine und von einer Reaktionszeit der Sensoreinheit.

Aufgrund der zusätzlichen Absicherung der Maschine mittels des ersten Schutzbereichs, führt die Reduzierung des Sicherheitsabstands zwischen dem ersten und zweiten Schutzbereich zu keiner Gefahrensituation, da der Bediener einen ausreichenden Abstand bis zur Gefahrenstelle hat. Es müsste lediglich beurteilt werden, ob es wahrscheinlich ist, dass die Maschine gerade einen Fehler in ihrem Steuerungssystem hat und gleichzeitig ein Mensch von außen in den zweiten Schutzbereich eindringt. Müssen diese Ereignisse gleichzeitig angenommen werden, so ist der Sicherheitsabstand sowohl basierend auf der Annäherungsgeschwindigkeit des Fremdobjekts (des Bedieners) als auch basierend auf dem Nachlaufweg der Maschine zu berechnen. Kann man aber diesen Extremfall ausschließen, und das scheint immer dann sinnvoll zu sein, wenn der Mensch nicht zyklisch in den Schutzbereich eingreifen muss (beispielsweise zur Materialentnahme oder Zuführung), so genügt es den Sicherheitsabstand basierend auf der Annährungsgeschwindigkeit des Menschen zu dimensionieren.

In einer weiteren Ausgestaltung der Erfindung weist die Konfigurationseinheit ein Eingabemodul zur Definition des ersten und/oder des zweiten Schutzbereichs auf.

Dies kann beispielsweise durch ein Eingabe-Panel oder ein externes Eingabegerät (z.B. ein Computer) realisiert werden, welcher mit der Konfigurationseinheit der Vorrichtung verbunden ist. Auf diese Weise lassen sich die beiden Schutzbereiche manuell definieren. Aufgrund der Definition des zweiten Schutzbereichs in Abhängigkeit von dem ersten Schutzbereich wird zumeist die manuelle Eingabe des ersten Schutzbereichs genügen. In der Praxis kann dies beispielsweise dadurch erfolgen, dass Referenzmarken um die Maschine herum positioniert werden mittels derer der erste Schutzbereich festgelegt wird. Da der erste Schutzbereich vorzugsweise in Abhängigkeit des tatsächlich programmierten Arbeitsbereichs der Maschine definiert wird, werden die Referenzpunkte in diesem Fall an den tatsächlich programmierten äußeren Auslenkungspunkten der Maschine positioniert. Vereinfacht ließe sich dies auch dadurch gewährleisten, dass die tatsächlich programmierte Maximalauslenkung der Maschine (nicht zu verwechseln mit der maximal möglichen Auslenkung der Maschine) gemessen wird und der erste Schutzbereich dann kreisförmig in diesem Radialabstand um die Maschine herum definiert wird. Es versteht sich jedoch, dass der erste Schutzbereich mit Hilfe des Eingabemoduls auch exakter definiert werden kann, so dass dieser dann nicht kreisförmig um die Maschine herum gebildet ist, sondern in einem beliebigen Muster, das der tatsächlich programmierten Arbeitsbewegung der Maschine entspricht. In diesem Fall würde, aufgrund der abhängigen Definition des zweiten Schutzbereichs, auch der zweite Schutzbereich eine gleiche oder ähnliche geometrische Form aufweisen.

Gemäß einer alternativen Ausgestaltung der vorliegenden Erfindung ist die Konfigurationseinheit mit der Maschinensteuerung gekoppelt, welche die Bewegungen der Maschine steuert, um den ersten Schutzbereich anhand von Parametern festlegen zu können, welche zur Bewegungssteuerung der Maschine verwendet werden.

Die Maschinensteuerung liefert in dieser Ausgestaltung also direkt die Parameter, die zur Festlegung des ersten Schutzbereichs benötigt werden. Somit lässt sich die Festlegung des ersten Schutzbereichs und damit auch des zweiten Schutzbereichs in Abhängigkeit davon automatisiert vornehmen. Dies erlaubt nicht nur eine exaktere Definition der Schutzbereiche an die tatsächlich programmierte Bewegung der Maschine, sondern verringert auch die Installationszeit der Vorrichtung erheblich. Ein weiterer Vorteil besteht darin, dass eine Änderung der Maschinenbewegung, also eine Änderung der Maschinenprogrammierung, automatisch auch zu einer entsprechenden Anpassung der beiden Schutzbereiche führt. Bei der oben beschriebenen manuellen Festlegung der beiden Schutzbereiche besteht dagegen die Möglichkeit, dass der Bediener bei einer Änderung der Maschinenprogrammierung vergisst, auch die Schutzbereiche entsprechend anzupassen. Jedoch wäre auch dieser Fall mit der neuen Vorrichtung abgesichert. Würde die Maschine nämlich bei der neu programmierten Bewegung in den ersten Schutzbereich eindringen, würde sofort die sicherheitsrelevante Funktion ausgelöst, ohne dass es zu einer gefährlichen Kollision kommen kann.

Gemäß einer weiteren Ausgestaltung der Erfindung hat die sicherheitsrelevante Funktion ein Abschalten der Maschine oder, wenn ein Eindringen der Maschine in den ersten Schutzbereich detektiert wird, eine adaptive Anpassung des zweiten Schutzbereichs, insbesondere des zweiten Abstands, zur Folge.

Ein Notaus oder Nothalt der Maschine ist die übliche Folge, wenn die Maschine in den ersten Schutzbereich eindringt. Alternativ dazu lässt sich aber auch bei einem solchen Eindringen der Maschine in den ersten Schutzbereich der zweite Schutzbereich entsprechend anpassen. In diesem Fall detektiert die Sensoreinrichtung die Eindringtiefe der Maschine in den ersten Schutzbereich, die Auswerteeinheit wertet dies aus und passt dann entsprechend den Sicherheitsabstand zwischen dem ersten und dem zweiten Schutzbereich um die detektierte und ausgewertete Eindringtiefe an. Statt die Maschine auszuschalten, könnte diese dadurch weiter in Betrieb gehalten werden, ohne dass es zu Einbußen in der Sicherheit kommt.

Gemäß einer weiteren Ausgestaltung sind der erste und der zweite Schutzbereich als imaginäre, dreidimensionale Schutzbereiche ausgestaltet, die zumindest teilweise die Maschine umgeben.

Vorzugsweise umgeben die beiden Schutzbereiche die Maschine nur dann vollständig, wenn diese einen Arbeitsradius von 360° aufweist. Ansonsten genügt es, wenn die beiden Schutzbereiche nur den tatsächlich programmierten Arbeitsbereich der Maschine nach außen hin abschirmen. Wie erwähnt, sind die Schutzbereiche vorzugsweise als imaginäre, dreidimensionale Schutzbereiche ausgestaltet. Die Schutzbereiche lassen sich daher auch als Schutzräume bezeichnen. Sie können die Maschine auch vollständig, d.h. sowohl nach oben hin als auch seitlich ringsherum abschirmen. Die Dicke der Schutzbereiche in Radialrichtung vom Maschinenmittelpunkt aus gemessen, entspricht dabei vorzugsweise zumindest der detektierbaren Eindringtiefe C. Die Dicke der Schutzbereiche sollte, wie bereits erwähnt, systemabhängig definiert sein und sollte daher vorzugsweise auch von der Reaktionszeit des Sensors und des Auswerteprozesses abhängen.

Gemäß einer weiteren bevorzugten Ausgestaltung weist die Sensoreinheit ein mehrkanalig-redundantes, multiokulares Kamerasystem auf.

Ein solches Kamerasystem ist in der EP 1 543 270 B1 beschrieben, deren Offenbarungsgehalt hierdurch Bezugnahme vollumfänglich aufgenommen ist. Ein solches Kamerasystem wird von der Anmelderin unter dem Namen SafetyEYE vertrieben.

In einer weiteren Ausgestaltung ist die Sensoreinheit dazu eingerichtet, einen Entfernungswert zu ermitteln, der für die räumliche Lage von zumindest einem Fremdobjekt repräsentativ ist, wobei der Entfernungswert durch ein Laufzeitmessverfahren und/oder durch einen stereoskopischen Vergleich zweier Kamerabilder ermittelt wird.

Bei einem Laufzeitmessverfahren wird die Laufzeit eines Signals, insbesondere eines Lichtsignals, zu einem Fremdobjekt und zurück gemessen. Aus der bekannten Ausbreitungsgeschwindigkeit des Signals lässt sich die Entfernung zu dem Fremdobjekt bestimmen. Laufzeitmessverfahren sind eine sehr kostengünstige Möglichkeit, um Entfernungsinformationen zu gewinnen und eine dreidimensionale Bildauswertung zu ermöglichen.

Stereoskopische Verfahren zur Bestimmung von Entfernungsinformationen ähneln der Funktionsweise des menschlichen Auges, indem sie die Entfernung zu einem Objekt anhand der sogenannten Disparität bestimmen, die sich in den zumindest zwei Kamerabildern aufgrund der leicht unterschiedlichen Blickwinkel ergibt. Es versteht sich, dass diese Ausgestaltung auch trinokulare Verfahren und Vorrichtungen einschließt, d.h. diese Ausgestaltung ist nicht auf die Verwendung von genau zwei Kameras bzw. zwei Kamerabildern beschränkt. Die dreidimensionale Überwachung eines Überwachungsbereichs mit Hilfe eines stereoskopischen Verfahrens eignet sich für die bevorzugte Anwendung besonders gut, weil redundante System in Bezug auf die Ein-Fehler-Sicherheit vorteilhaft sind. Ein stereoskopisches System kann die mehrfach vorhandenen Kameras bzw. Bildaufnahmeeinheiten optimal nutzen.

Es versteht sich, dass sich die oben genannten Ausgestaltungen nicht nur auf die in den Patentansprüchen definierte Vorrichtung, sondern auch auf das Verfahren beziehen. Das neue Verfahren hat demnach gleiche oder ähnliche Ausgestaltungen wie die neue Vorrichtung.

In einer ersten Ausgestaltung des erfindungsgemäßen Verfahrens wird der erste Schutzbereich in Abhängigkeit eines tatsächlich programmierten Arbeitsbereich der Maschine definiert, und der zweite Schutzbereich wird in Abhängigkeit des ersten Schutzbereichs definiert.

In einer weiteren Ausgestaltung des erfindungsgemäßen Verfahrens ist die Differenz zwischen dem zweiten und dem ersten Abstand ein definierter Sicherheitsabstand, welcher zumindest abhängig von einer geschätzten Annäherungsgeschwindigkeit eines sich an die Maschine annähernden Fremdobjekts, von einer Abschaltzeit der Maschine und von einer Reaktionszeit der Sensoreinheit ist.

Gemäß einer weiteren Ausgestaltung des erfindungsgemäßen Verfahrens weist dieses ferner die folgenden Schritte auf: Steuern von Bewegungen der Maschine mittels einer Maschinensteuerung; Festlegen des ersten Schutzbereichs anhand von Parametern, welche zur Bewegungssteuerung der Maschine verwendet werden.

In einer weiteren Ausgestaltung des erfindungsgemäßen Verfahrens weist dieses den folgenden Verfahrensschritt auf: Adaptives Anpassen des zweiten Schutzbereichs, insbesondere des zweiten Abstands, wenn ein Eindringen der Maschine in den ersten Schutzbereich detektiert wird.

In einer weiteren Ausgestaltung des erfindungsgemäßen Verfahrens weist dieses den folgenden Verfahrensschritt auf: Ermitteln eines Entfernungswerts, der für die räumliche Lage von zumindest einem Fremdobjekt repräsentativ ist, wobei der Entfernungswert durch ein Laufzeitmessverfahren und/oder durch einen stereoskopischen Vergleich zweier Kamerabilder ermittelt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine vereinfachte Darstellung der neuen Vorrichtung,

Fig. 2    eine vereinfachte Darstellung der neuen Vorrichtung in einem Blockdiagramm

Fig. 3    eine perspektivische Darstellung auf ein Kamerasystem, welches in der neuen Vorrichtung zum Einsatz kommen kann, von schräg unten,

Fig. 4    eine vereinfachte Darstellung zur Veranschaulichung des Funktionsprinzips der neuen Vorrichtung und des neuen Verfahrens gemäß einer ersten Ausführungsform, und

Fig. 5    eine vereinfachte Darstellung zur Veranschaulichung des Funktionsprinzips der neuen Vorrichtung und des neuen Verfahrens gemäß einer weiteren Ausführungsform.

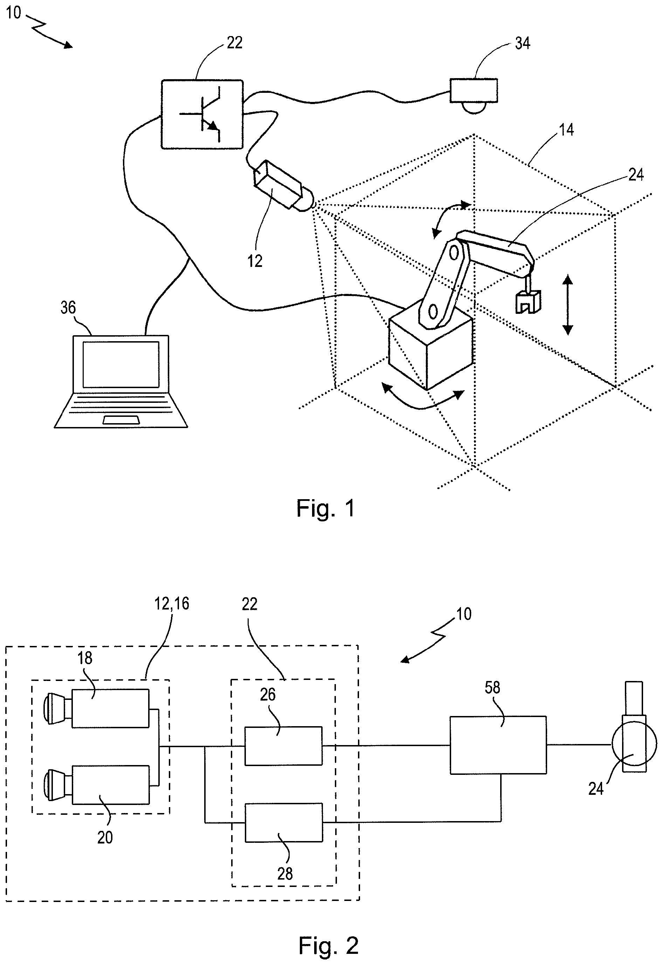

In den Fig. 1 und 2 ist ein bevorzugtes Ausführungsbeispiel der neuen Vorrichtung in seiner Gesamtheit mit der Bezugsziffer 10 bezeichnet.

Die Vorrichtung 10 beinhaltet zumindest eine Sensoreinheit 12, die dazu ausgebildet ist, einen Raumbereich bzw. Überwachungsbereich 14 zu überwachen, indem eine automatisiert arbeitende Anlage oder Maschine, hier ein Roboter 24, angeordnet ist. Zu diesem Zweck weist die Sensoreinheit 12 vorzugsweise ein Kamerasystem 16 auf, das auf den Überwachungsbereich 14 ausgerichtet ist. Das Kamerasystem 16 ist vorzugsweise als Stereo-Kamerasystem ausgestaltet, das zumindest eine erste Kamera 18 und eine zweite Kamera 20 aufweist. Die Kameras 18, 20 liefern zwei leicht zueinander versetzte Bilder von dem abzusichernden Überwachungsbereich 14. Aufgrund des Versatzes der Kameras 18, 20 zueinander und mit Hilfe trigonometrischer Beziehungen kann die Entfernung von der Sensoreinheit 12 zu Objekten in dem Überwachungsbereich 14 anhand der Kamerabilder bestimmt werden. Eine bevorzugte Sensoreinheit dieser Art ist in der eingangs erwähnten EP 1 543 270 B1 beschrieben. In anderen Ausführungsbeispielen kann die Sensoreinheit 12 eine Laufzeitkamera beinhalten. Hierunter ist eine Kamera zu verstehen, die einerseits 2D-Bilder eines zu überwachenden Bereichs liefert. Darüber hinaus liefert die Kamera Entfernungsinformationen, die aus einer Laufzeitmessung gewonnen werden. Die Sensoreinheit 12 kann ebenso dazu ausgebildet sein als 3D-Scanner zu fungieren und/oder eine andere Technologie verwenden, die es ermöglicht, 3D-Bilder von einem abzusichernden Überwachungsbereich zu erzeugen.

Darüber hinaus können in anderen Ausführungsbeispielen mehrere 1D- und/oder 2D-Sensoren paarweise und/oder als Gesamtheit eine 3D-Sensoreinheit bilden, die die benötigten 3D-Bilder von dem Überwachungsbereich 14 liefert. Es ist also nicht zwingend erforderlich, wenngleich bevorzugt, ein Stereokamerasystem 16 als Sensoreinheit 12 für die neue Vorrichtung 10 zu verwenden.

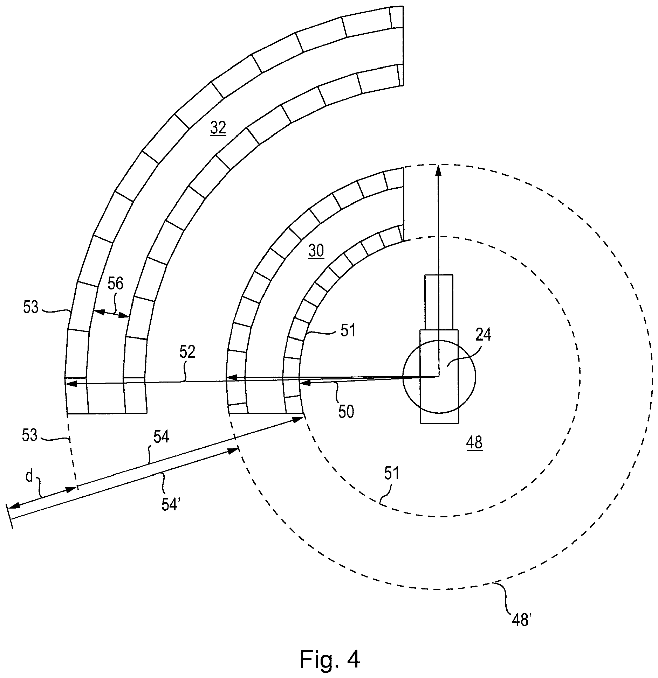

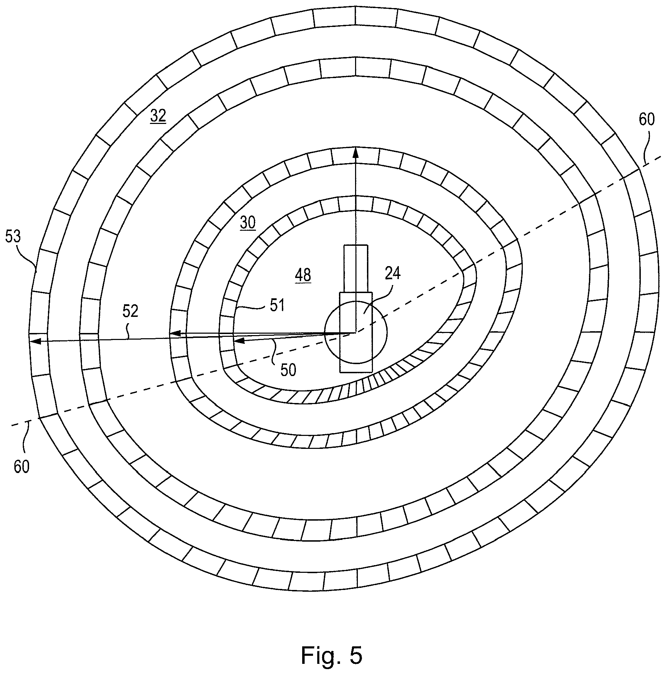

Die Sensoreinheit 12 ist mit einer Steuerung 22 verbunden. Die Steuerung 22 ist dazu ausgebildet, die mit dem Kamerasystem 16 aufgenommenen Bilder des Überwachungsbereichs 14 auszuwerten und in Abhängigkeit davon den Roboter 24 still zu setzen oder in einen gefahrlosen Zustand zu bringen, wenn eine gefährliche Situation erkannt wird. Abweichend von der Darstellung in Fig. 1 können die Sensoreinheit 12 und die Steuerung 22 auch in einem gemeinsamen Gehäuse integriert sein. Die Steuerung 22 weist vorzugsweise eine Auswerteeinheit 26 sowie eine Konfigurationseinheit 28 auf (siehe Fig. 2). Die Auswerteeinheit 26 ist dazu eingerichtet, die von dem Kamerasystem 16 aufgenommenen Kamerabilder auszuwerten und im Falle einer gefährlichen Situation eine sicherheitsrelevante Funktion, beispielsweise ein Abschalten des Roboters 24, auszulösen. Die Konfigurationseinheit 28 dient dagegen der Definition von zumindest zwei virtuellen Schutzbereichen 30, 32, wie dies nachfolgend anhand der Fig. 4 und 5 im Detail erläutert wird.

Die Auswerteeinheit 26 und die Konfigurationseinheit 28 können entweder als separate Einheiten, sowohl Software- als auch Hardware-basiert realisiert sein. Alternativ dazu können diese beiden Einheiten 26, 28 auch in einer gemeinsamen Software- oder Hardware-basierten Einheit innerhalb der Steuerung 22 realisiert sein. Die in Fig. 1 gezeigten Verbindungen zwischen Sensoreinheit 12, Steuerung 22 und Maschine 24 können jeweils als kabelgebundene oder kabellose Verbindungen ausgestaltet sein. Mit der Bezugsziffer 34 ist eine Lichtquelle bezeichnet, die optional dazu vorgesehen sein kann, den Überwachungsbereich 14 zu beleuchten. In manchen Ausführungsbeispielen der Erfindung kann die Lichtquelle 34 dazu dienen, Lichtsignale zu erzeugen, aus deren Laufzeit die Entfernung zu Objekten im Überwachungsbereich 14 ermittelt werden kann. In den derzeit bevorzugten Ausführungsbeispielen dient die Lichtquelle 34 jedoch lediglich zur Beleuchtung des Überwachungsbereichs 14. Eine 3D-Erfassung des Überwachungsbereichs 14 erfolgt, wie oben bereits erwähnt, vorzugsweise mit Hilfe einer stereoskopischen Bildaufnahme.

Des Weiteren zeigt Fig. 1 schematisch noch ein Eingabemodul, welches mit der Bezugsziffer 36 bezeichnet ist. Dieses Eingabemodul 36 kann zur Installation und Konfiguration der Vorrichtung 10, insbesondere der Sensoreinheit 12, verwendet werden. Es dient, wie nachfolgend noch im Detail erläutert wird, insbesondere der manuellen Einstellung und Konfiguration der virtuellen Schutzbereiche 30, 32. Das Eingabemodul 36 kann als spezielles Eingabe-Panel auf die Vorrichtung 10 angepasst sein. Alternativ dazu kann dieses aber auch durch einen herkömmlichen Computer realisiert sein, auf dem eine Software installiert ist, die sich zur Installation und Konfiguration der Vorrichtung 10 eignet.

Des Weiteren sei noch erwähnt, dass die Vorrichtung 10 auch mehrere Auswerteeinheiten 26 beinhalten kann, die über einen Bus oder ein anderes Kommunikationsmedium miteinander verbunden sind. Darüber hinaus ist es möglich, dass ein Teil der Signal- und Datenverarbeitungsleistung der Sensoreinheit 12 in der Auswerteeinheit 26 untergebracht ist. Beispielsweise kann die Bestimmung der Position eines Objekts anhand der Stereobilder der Kameras 18, 20 in einem Rechner erfolgen, der auch die Auswerteeinheit 26 implementiert. Auch die Sensoreinheit 12 muss nicht zwingend in einem einzigen Gehäuse untergebracht sein. Vielmehr kann die Sensoreinheit 12 im Sinne der Erfindung auch auf mehrere Baugruppen und/oder Gehäuse verteilt sein, wenngleich es bevorzugt ist, die Sensoreinheit 12 so kompakt wie möglich zu realisieren.

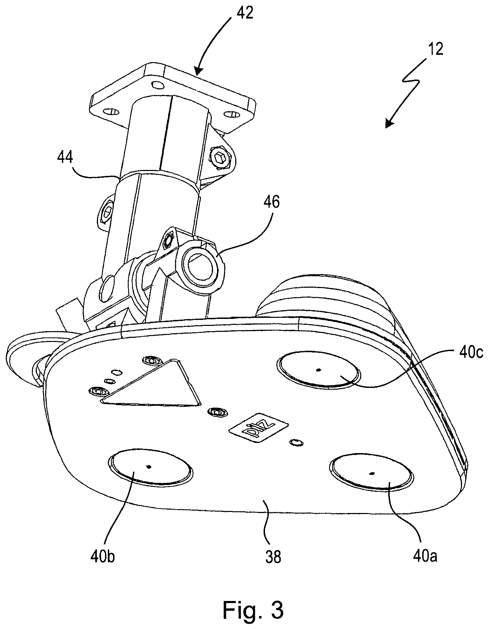

Fig. 3 zeigt eine bevorzugte Ausführungsform der Sensoreinheit 12, wie sie von der Anmelderin unter dem Namen SafetyEYE vertrieben wird. Gemäß dieser Ausführungsform weist die Sensoreinheit 12 einen Systemkörper 38 auf, welcher in Form einer weitgehend ebenen Platte ausgestaltet ist. Diese Platte 38 hat hier eine in etwa rautenförmige Grundfläche. In drei der vier "Ecken" des Systemkörpers 38 sind insgesamt drei Kameraeinheiten 40a, 40b, 40c angeordnet. Mit der Bezugsziffer 42 ist ein Montageteil bezeichnet, mit dessen Hilfe die Sensoreinheit 12 an einer Wand, einem Masten oder dergleichen (hier nicht dargestellt) befestigt werden kann. Das Montageteil 42 ist hier ein Montagearm mit mehreren Drehgelenken 44, 46, die ein Verschwenken des Systemkörpers 38 um zumindest zwei zueinander orthogonale Drehachsen ermöglichen. Vorzugsweise lässt sich der Systemkörper auch noch um eine dritte, dazu orthogonal Drehachse verschwenken. Das zugehörige Drehgelenk ist in der Ansicht von Fig. 3 jedoch verdeckt. Die Kameraeinheiten 40a, 40b, 40c lassen sich somit relativ einfach auf den zu überwachenden Überwachungsbereich 14 ausrichten. Die drei Kameraeinheiten 40a, 40b, 40c spannen an dem Systemkörper 38 ein Dreieck auf. Die durch diese erzeugten Kamerabilder sind somit leicht versetzt zueinander. Die Kameraeinheiten 40a, 40b bzw. 40a, 40c bilden jeweils ein Kamerapaar, wobei die Entfernung der Kameraeinheiten 40a, 40b voneinander und die Entfernungen der Kameraeinheiten 40a, 40c voneinander in diesem Ausführungsbeispiel jeweils exakt gleich und unveränderlich sind. Diese beiden Entfernungen bilden jeweils eine Basisweite für eine stereoskopische Auswertung der Kamerapaare 40a, 40b und 40a, 40c. Prinzipiell könnte darüber hinaus auch das Kamerapaar 40b, 40c für eine separate stereoskopische Auswertung verwendet werden. Dadurch, dass die beiden stereoskopischen Kamerapaare 40a, 40b und 40a, 40c nicht entlang einer gemeinsamen Geraden angeordnet sind, lassen sich auch Objekte in dem Überwachungsbereich 14 detektieren, die für ein einzelnes Kamerapaar nicht sichtbar sind, beispielsweise aufgrund von Abschattungen durch andere Objekte. Außerdem wird mit Hilfe der drei Kameraeinheiten 40a, 40b, 40c sichergestellt, dass die Entfernung zu beliebigen Objekten im Überwachungsbereich 14 bestimmt werden kann. Wenn lediglich zwei Kameraeinheiten verwendet würden, könnte die Entfernung zu einer parallel zur Basisweite verlaufenden, langgestreckten Kontur möglicherweise nicht bestimmt werden.

Ein wesentlicher Punkt der vorliegenden Erfindung besteht in der Definition der Schutzbereiche 30, 32 sowie deren Funktion, welche nachfolgend beispielhaft anhand der Fig. 4 und 5 im Detail erläutert wird. Die Vorrichtung 10 erlaubt eine Erstellung von virtuellen, dreidimensionalen Schutzbereichen 30, 32, welche sich mittels der Sensoreinheit 12 überwachen lassen. Die Definition der Schutzbereiche 30, 32 geschieht vorzugsweise über die bereits erwähnte Konfigurationseinheit 28. Die Schutzbereiche 30, 32 lassen sich über die Konfigurationseinheit 28 vorzugsweise software-gestützt manuell oder automatisiert einrichten.

Vorliegend werden mindestens zwei Schutzbereiche, ein erster Schutzbereich 30 und ein zweiter Schutzbereich 32, von der Vorrichtung 10 eingerichtet. Der erste Schutzbereich 30 dient im Wesentlichen der Überwachung der Maschine 24, ob diese ihren tatsächlich programmierten Arbeitsbereich 48 einhält. Dieser erste Schutzbereich 30 hat einen ersten Abstand 50 von der Maschine 24 und umgibt diese zumindest teilweise. Der erste Abstand 50 wird, wie in den Fig. 4 und 5 dargestellt, von einer inneren, der Maschine 24 zugewandten Grenze 51 des ersten Schutzbereichs 50 aus gemessen. Der zweite Schutzbereich 32 dient im Wesentlichen der Überwachung, ob ein Fremdobjekt, beispielsweise eine Person, sich von außen der Maschine 24 nähert. Dieser zweite Schutzbereich 32 hat einen zweiten Abstand 52 von der Maschine 24, welcher größer ist als der erste Abstand 50 des ersten Schutzbereichs 30 von der Maschine 24. Der zweite Schutzbereich 32 liegt sozusagen also weiter außen. Im Gegensatz zu dem ersten Abstand 50 wird der zweite Abstand 52, wie in den Fig. 4 und 5 dargestellt, von einer äußeren, von der Maschine 24 abgewandten Grenze 53 des zweiten Schutzbereichs 52 aus gemessen. Sowohl die Form als auch die Abstände 50, 52 der Schutzbereiche 30, 32 lassen sich je nach Anwendungsfall variabel definieren. Dies ist, wie bereits erläutert, beispielsweise mit Hilfe des Eingabemoduls 36 (siehe Fig. 1) möglich.

Die Sensoreinheit 12 überwacht beide Schutzbereiche 30, 32. Im Falle der in Fig. 3 gezeigten Ausführungsform decken die von den Kameraeinheiten 40a, 40b, 40c erzeugten Kamerabilder also die beiden Schutzbereiche 30, 32 ab. Die Schutzbereiche 30, 32 liegen also mit anderen Worten innerhalb des Überwachungsbereichs 14. Mit Hilfe der Auswerteeinheit 26 werden die Kamerabilder ausgewertet, um zu detektieren, ob ein Maschinenelement der Maschine 24 in den ersten Schutzbereich 30 eindringt, und/oder ob ein Fremdobjekt von außen in den zweiten Schutzbereich 32 eindringt. Sollte eines dieser Ereignisse eintreten, löst die Auswerteeinheit 26 die sicherheitsrelevante Funktion aus, wodurch die Maschine in einen sicheren Zustand gebracht wird.

Im Gegensatz zu den bisher bekannten Sicherheitssystemen dieser Art detektiert die Vorrichtung 10 also nicht nur, ob ein Fremdobjekt sich von außen dem gefährlichen Arbeitsbereich 48 der Maschine 24 nähert, sondern auch ob die Maschine 24 selbst ihren programmierten Arbeitsbereich 48 einhält. Da insbesondere die letztgenannte Überprüfung von den bisher bekannten Sicherheitssystemen nicht ausgeführt wird, müssen die in diesen Systemen definierten Schutzräume (welche dem zweiten Schutzbereich 32 entsprechen) in einem weiteren Abstand von der Maschine 24 definiert werden, als dies vorliegend der Fall sein kann. Da die Maschine 24 in diesen Systemen üblicherweise selbst nicht auf Einhaltung ihres programmierten Arbeitsbereichs 48 überwacht wird, wird der Sicherheitsabstand ($S = K \cdot (t_1 + t_2) + C + Z_g$) üblicherweise von dem maximal möglichen Arbeitsbereich der Maschine 24 aus gemessen, welchen die Maschine theoretisch erreichen könnte. Dieser maximal mögliche Arbeitsbereich ist in Fig. 4 mit der Bezugsziffer 48' gekennzeichnet. Ohne die zusätzliche Überwachung der Maschine 24 selbst, müsste der Schutzbereich 32 also ausgehend von dem maximal möglichen Arbeitsbereich 48' den zusätzlichen Sicherheitsabstand einhalten, welcher in Fig. 4 mit der Bezugsziffer 54' angedeutet ist und gemäß obiger, genormter Formel berechnet wird. Der Schutzbereich 32 müsste danach also wesentlich weiter außen liegen, also einen größeren Abstand von der Maschine 24 aufweisen, als dies in Fig. 4 gezeigt ist.

Da vorliegend jedoch ein zweiter Schutzbereich 30 (erster Schutzbereich 30 genannt) eingerichtet ist, der den Arbeitsbereich 48 der Maschine 24 überwacht, lässt sich der Gesamtabstand 52 (zweiter Abstand 52 genannt) der Außengrenze 53 des Schutzbereichs 32 von der Maschine 24 verringern, ohne dass dies Einbußen für die Sicherheit zur Folge hat. Da es sich nun durch die neue Sensoreinheit 12 detektieren lässt, ob die Maschine 24 ungewollt ihren programmierten Arbeitsbereich 48 verlässt, erscheint eine Dimensionierung des Sicherheitsabstands 54' ausgehend von dem technisch maximal möglichen Arbeitsbereich 48' der Maschine 24 nicht mehr notwendig. Der eingezeichnete Sicherheitsabstand 54 ist zwar vorzugsweise immer noch der gleiche Sicherheitsabstand wie der eingezeichnete Sicherheitsabstand 54', jedoch wird dieser vorliegend ausgehend von dem tatsächlich programmierten Arbeitsbereich 48 und nicht von dem theoretisch maximal möglichen Arbeitsbereich 48' der Maschine 24 aus gemessen.

Die neue Vorrichtung 10 ermöglicht also eine Reduzierung des Gesamtabstands zwischen dem äußeren Rand 53 des zweiten Sicherheitsbereichs 32 und der Maschine 24. Genauer gesagt entspricht diese Abstandsreduzierung der Differenz zwischen technisch maximal möglichem Arbeitsbereich 48' der Maschine 24 und tatsächlich programmiertem Arbeitsbereich 48 der Maschine 24. Dieser Platzgewinn ist in Fig. 4 mit d angedeutet.

Die Abstandsreduzierung, welche wie bereits erwähnt, mit der erfindungsgemäßen Vorrichtung 10 ohne Sicherheitseinbußen möglich ist, erweist sich insbesondere in Produktionshallen, wo eine Vielzahl von automatisiert arbeitenden Maschinen aufgestellt sind, als überaus vorteilhaft. Da sich der Überwachungsbereich jeder einzelnen Maschine dadurch jeweils insgesamt verkleinern lässt, ermöglicht dies eine Anordnung mehrerer automatisiert arbeitender Maschinen in relativ geringen Abständen zueinander.

Die Differenz zwischen dem zweiten Abstand 52 und dem ersten Abstand 50 entspricht dem oben berechneten Sicherheitsabstand S (54). Beide Schutzbereiche haben vorzugsweise eine Breite 56, welche zumindest der angenommenen Eindringtiefe C aus obiger Formel entspricht. Die Breite des ersten Schutzbereichs 30 (gemessen in Radialrichtung) entspricht vorzugsweise der Differenz aus technisch maximal möglichem Arbeitsbereich 48' der Maschine 24 und tatsächlich programmiertem Arbeitsbereich 48 der Maschine 24.

Anstelle einer manuellen Definition der Sicherheitsbereiche 30, 32 bzw. einer manuellen Definition von deren Abständen 50, 52 von der Maschine 24, kann dies auch automatisch geschehen. Die Konfigurationseinheit 28 kann hierzu mit der Maschinensteuerung 58 gekoppelt sein, wie dies in Fig. 2 schematisch dargestellt ist. Dies ermöglicht es, den ersten Schutzbereich 30 anhand der Parameter festzulegen, welche zur Bewegungssteuerung der Maschine 24 verwendet werden. Hieraus könnte beispielsweise eine Gestalt der Schutzbereiche 30, 32 entstehen, wie diese in Fig. 5 angedeutet ist. In dem darin gezeigten Beispiel bewegt sich die Maschine 24 nur innerhalb des gestrichelt angedeuteten Bewegungsradius 60. Ein Verschwenken der Maschine 24 außerhalb dieses Bewegungsradius 60 ist nicht vorgesehen. Der erste und der zweite Schutzbereich 30, 32 können daher außerhalb des Bewegungsradius 60 sehr nahe an der Maschine 24 vorbeiverlaufen. Die sogenannten ersten und zweiten Abstände 50, 52 sind damit variabel. Wird die Bewegung der Maschine 24 umprogrammiert, so hätte dies bei einer Kopplung der Konfigurationseinheit 28 mit der Maschinensteuerung 48 automatisch eine Neu-Definition der Schutzbereiche 30, 32 an den neuen tatsächlich programmierten Arbeitsbereich 48 der Maschine 24 zur Folge, ohne dass dies vom Bediener umprogrammiert werden muss. Da der Sicherheitsabstand zwischen dem zweiten und dem ersten Schutzbereich 32, 30 normiert vorgegeben ist, muss ohnehin nur der erste Schutzbereich 30 an den neu programmierten Arbeitsbereich 48 der Maschine 24 angepasst werden, da die Anpassung des zweiten Schutzbereichs 32 automatisch in Abhängigkeit vom ersten Schutzbereich 30 geschieht.

Es versteht sich, dass die beiden Schutzbereiche 30, 32 je nach Anwendungsfall natürlich auch von der runden oder halbrunden Form abweichen können. Sie können beispielsweise auch eckig ausgestaltet sein. Vorzugsweise sind diese jedoch jeweils als dreidimensionale Räume ausgestaltet, deren Dicke zumindest der Eindringtiefe C entspricht.

### Patentansprüche

1. Vorrichtung (10) zum Absichern eines Überwachungsbereichs (14), in welchem eine automatisiert arbeitende Maschine (24) angeordnet ist, mit einer Sensoreinheit (12) zur Überwachung des Überwachungsbereichs (14), wobei die Sensoreinheit (12) ein Kamerasystem (16) aufweist, das auf den Überwachungsbereich (14) ausgerichtet ist, mit einer Konfigurationseinheit (28), und mit einer Auswerteeinheit (26) zum Auslösen einer sicherheitsrelevanten Funktion,
dadurch gekennzeichnet, dass die Konfigurationseinheit (28) zur Definition von zumindest einem ersten und einem zweiten Schutzbereich (30, 32) eingerichtet ist, wobei der erste Schutzbereich (30) einen ersten Abstand (50) von der Maschine (24) hat, und der zweite Schutzbereich (32) einen zweiten, größeren Abstand (52) von der Maschine (24) hat als der erste Schutzbereich (32), dass die Sensoreinheit (12) beide Schutzbereiche (30, 32) überwacht, und dass die Auswerteeinheit (26) die von dem Kamerasystem (16) erzeugten Kamerabilder sowohl dahingehend auswertet, ob ein Maschinenelement der Maschine (24) in den ersten Schutzbereich (30) eindringt, als auch dahingehend auswertet, ob ein Fremdobjekt in den zweiten Schutzbereich (32) eindringt, und dazu eingerichtet ist, die sicherheitsrelevante Funktion auszulösen, wenn zumindest eines dieser Ereignisse eintritt.

2. Vorrichtung nach Anspruch 1, wobei der erste Schutzbereich (30) in Abhängigkeit eines tatsächlich programmierten Arbeitsbereichs (48) der Maschine (24) definiert ist.

3. Vorrichtung nach Anspruch 1 oder 2, wobei der zweite Schutzbereich (32) in Abhängigkeit des ersten Schutzbereichs (30) definiert ist und die Differenz zwischen dem zweiten und ersten Abstand (52, 50) ein definierter Sicherheitsabstand ist.

4. Vorrichtung nach Anspruch 3, wobei der definierte Sicherheitsabstand zumindest abhängig von einer geschätzten Annäherungsgeschwindigkeit eines sich an die Maschine (24) annähernden Fremdobjekts, von einer Abschaltzeit der Maschine (24) und von einer Reaktionszeit der Sensoreinheit (12) ist.

5. Vorrichtung nach einem der Ansprüche 1 bis 4, wobei die Konfigurationseinheit (28) ein Eingabemodul (36) zur Definition des ersten und/oder des zweiten Schutzbereichs (30, 32) aufweist.

6. Vorrichtung nach einem der Ansprüche 1 bis 5, wobei Bewegungen der Maschine (24) von einer Maschinensteuerung (58) gesteuert werden, und wobei die Konfigurationseinheit (28) mit der Maschinensteuerung (58) gekoppelt ist, um den ersten Schutzbereich (30) anhand von Parametern festzulegen, welche zur Bewegungssteuerung der Maschine (24) verwendet werden.

7. Vorrichtung nach einem der Ansprüche 1 bis 6, wobei die sicherheitsrelevante Funktion ein Abschalten der Maschine (24) oder, wenn ein Eindringen der Maschine (24) in den ersten Schutzbereich (30) detektiert wird, eine adaptive Anpassung des zweiten Schutzbereichs (32), insbesondere des zweiten Abstands (52), zur Folge hat.

8. Vorrichtung nach einem der Ansprüche 1 bis 7, wobei der erste und der zweite Schutzbereich (30, 32) imaginäre, dreidimensionale Schutzbereiche sind, die zumindest teilweise die Maschine (24) umgeben.

9. Vorrichtung nach einem der Ansprüche 1 bis 8, wobei das Kamerasystem (16) ein mehrkanalig-redundantes, multiokulares Kamerasystem (16) ist.

**10.** Vorrichtung nach Anspruch 9, wobei die Sensoreinheit (12) dazu eingerichtet ist, einen Entfernungswert zu ermitteln, der für die räumliche Lage von zumindest einem Fremdobjekt repräsentativ ist, wobei der Entfernungswert durch ein Laufzeitmessverfahren und/oder durch einen stereoskopischen Vergleich zweier Kamerabilder ermittelt wird.

**11.** Verfahren zum Absichern eines Überwachungsbereichs (14), in welchem eine automatisiert arbeitende Maschine (24) angeordnet ist, mit den Schritten:

- Bereitstellen einer Sensoreinheit (12) zur Überwachung des Überwachungsbereichs (14), wobei die Sensoreinheit (12) ein Kamerasystem (16) aufweist, das auf den Überwachungsbereich (14) ausgerichtet ist,
- Definition von zumindest einem ersten und einem zweiten virtuellen Schutzbereich (30, 32), wobei der erste Schutzbereich (30) einen ersten Abstand (50) von der Maschine (24) hat, und der zweite Schutzbereich (32) einen zweiten, größeren Abstand (52) von der Maschine (24) hat als der erste Schutzbereich (30),
- Überwachung beider Schutzbereiche (30, 32) mit der Sensoreinheit (12),
- Auswerten der von dem Kamerasystem (16) erzeugten Kamerabilder, um zu detektieren, ob ein Maschinenelement der Maschine (24) in den ersten Schutzbereich (30) eindringt, und ob ein Fremdobjekt in den zweiten Schutzbereich (32) eindringt, und
- Auslösen einer sicherheitsrelevanten Funktion, wenn detektiert wird, dass ein Maschinenelement der Maschine (24) in den ersten Schutzbereich (30) eindringt und/oder ein Fremdobjekt in den zweiten Schutzbereich (32) eindringt.

**12.** Verfahren nach Anspruch 11, wobei der erste Schutzbereich (30) in Abhängigkeit eines tatsächlich programmierten Arbeitsbereichs (48) der Maschine (24) definiert wird, und wobei der zweite Schutzbereich (32) in Abhängigkeit des ersten Schutzbereichs (30) definiert wird.

**13.** Verfahren nach Anspruch 11 oder 12, wobei die Differenz zwischen dem zweiten und ersten Abstand (52, 50) ein definierter Sicherheitsabstand ist, welcher zumindest abhängig von einer geschätzten Annäherungsgeschwindigkeit eines sich an die Maschine (24) annähernden Fremdobjekts, von einer Abschaltzeit der Maschine (24) und von einer Reaktionszeit der Sensoreinheit (12) ist.

**14.** Verfahren nach einem der Ansprüche 11 bis 13, ferner mit den Schritten:

- Steuern von Bewegungen der Maschine (24) mittels einer Maschinensteuerung (58),
- Festlegen des ersten Schutzbereichs (30) anhand von Parametern, welche zur Bewegungssteuerung der Maschine (24) verwendet werden.

**15.** Computerprogrammprodukt mit einem Datenträger, auf dem ein Programmcode gespeichert ist, der dazu ausgebildet ist, ein Verfahren mit den Verfahrensschritten nach einem der Ansprüche 11 bis 14 auszuführen, wenn der Programmcode auf einer Auswerteeinheit für eine Vorrichtung (10) nach einem der Ansprüche 1 bis 10 ausgeführt wird.

**Claims**

**1.** An apparatus (10) for safeguarding a monitoring area (14), in which an automatically operating machine (24) is disposed, with a sensor unit (12) for monitoring the monitoring area (14), wherein the sensor unit (12) comprises a camera system (16) that is oriented towards the monitoring area (14), with a configuration unit (28), and with an evaluation unit (26) for triggering a safety-related function, **characterized in that** the configuration unit (28) is configured to define at least one first and one second protection area (30, 32), wherein the first protection area (30) is at a first distance (50) from the machine (24) and the second protection area (32) is at a second, larger distance (52) from the machine (24) than the first protection area (32), **in that** the sensor unit (12) monitors both protection areas (30, 32), and **in that** the evaluation unit (26) evaluates the camera images produced by the camera system (16) to that effect both whether a machine element of the machine (24) enters the first protection area (30) as well as whether a foreign object enters the second protection area (32), and is configured to trigger the safety-related function if at least one of said events occurs.

**2.** The apparatus as claimed in claim 1, wherein the first protection area (30) is defined depending on an actually programmed working area (48) of the machine (24).

3.  The apparatus as claimed in claim 1 or 2, wherein the second protection area (32) is defined depending on the first protection area (30) and the difference between the second distance (52) and the first distance (50) is a defined safety distance.

4.  The apparatus as claimed in claim 3, wherein the defined safety distance is dependent at least on an estimated speed of approach of a foreign object that is approaching the machine (24), on a switch-off time of the machine (24) and on a response time of the sensor unit (12).

5.  The apparatus as claimed in any one of claims 1 to 4, wherein the configuration unit (28) comprises an input module (36) for defining the first and/or the second protection area (30, 32).

6.  The apparatus as claimed in any one of claims 1 to 5, wherein movements of the machine (24) are controlled by a machine control unit (58), and wherein the configuration unit (28) is coupled to the machine control unit (58) in order to define the first protection area (30) using parameters that are used for the movement control of the machine (24).

7.  The apparatus as claimed in any one of claims 1 to 6, wherein the safety-related function results in switching off the machine (24) or, if it is detected that the machine (24) enters the first protection area (30), in an adaptive adjustment of the second protection area (32), in particular of the second distance (52).

8.  The apparatus as claimed in any one of claims 1 to 7, wherein the first and the second protection areas (30, 32) are virtual, three-dimensional protection areas that at least partly surround the machine (24).

9.  The apparatus as claimed in any one of claims 1 to 8, wherein the camera system (16) is a multi-channel redundant, multiocular camera system (16).

10. The apparatus as claimed in claim 9, wherein the sensor unit (12) is configured to determine a distance value that is representative of the spatial position of at least one foreign object, wherein the distance value is determined by a transition time measurement method and/or by a stereoscopic comparison of two camera images.

11. A method for safeguarding a monitoring area (14), in which an automatically operating machine (24) is disposed, the method comprising the steps of:

    - providing a sensor unit (12) for monitoring the monitoring region (14) wherein the sensor unit (12) comprises a camera system (16) that is oriented towards the monitoring area (14),
    - defining at least a first and a second virtual protection area (30, 32), wherein the first protection area (30) is at a first distance (50) from the machine (24) and the second protection area (32) is at a second, larger distance (52) from the machine (24) than the first protection area (30),
    - monitoring both protection areas (30, 32) with the sensor unit (12),
    - evaluating the camera images produced by the camera system (16) to detect whether a machine element of the machine (24) enters the first protection area (30) and whether a foreign object enters the second protection area (32), and
    - triggering a safety-related function if it is detected that a machine element of the machine (24) enters the first protection area (30) and/or a foreign object enters the second protection area (32).

12. The method as claimed in claim 11, wherein the first protection area (30) is defined depending on an actually programmed working area (48) of the machine (24) and wherein the second protection area (32) is defined depending on the first protection area (30).

13. The method as claimed in claim 11 or 12, wherein the difference between the second distance (52) and the first distances (50) is a defined safety distance that is dependent at least on an estimated speed of approach of a foreign object that is approaching the machine (24), on a switch-off time of the machine (24) and on a response time of the sensor unit (12).

14. The method as claimed in any one of claims 11 to 13, further with the steps:

    - controlling displacements of the machine (24) by means of a machine control unit (58),
    - defining the first protection area (30) using parameters that are used for the displacement control of the machine (24).

**15.** A computer program product with a data medium on which a program code is stored that is designed to implement a method with the steps of the method as claimed in any one of claims 11 to 14 if the program code is executed on an evaluation unit for an apparatus (10) as claimed in any one of claims 1 through 10.

## Revendications

**1.** Dispositif (10) de sécurisation d'une zone de surveillance (14) dans laquelle est disposée une machine (24) fonctionnant de manière automatisée, comportant une unité de détection (12) servant à la surveillance de la zone de surveillance (14), dans lequel l'unité de détection (12) comprend un système de caméras (16) qui est orienté vers la zone de surveillance (14), comportant une unité de configuration (28), et comportant une unité d'évaluation (26) destinée à déclencher une fonction liée à la sécurité,
**caractérisé en ce que** l'unité de configuration (28) est conçue pour la définition d'au moins une première et une deuxième zone de protection (30, 32), la première zone de protection (30) étant située à une première distance (50) de la machine (24), et la deuxième zone de protection (32) étant située à une deuxième distance (52) de la machine (24), laquelle deuxième distance est plus grande que la distance de la première zone de protection (32) à la machine, **en ce que** l'unité de détection (12) surveille les deux zones de protection (30, 32), et **en ce que** l'unité d'évaluation (26) évalue les images de caméra produites par le système de caméras (16) de manière à déterminer si un élément de la machine (24) entre dans la première zone de protection (30) et de manière à déterminer également si un objet étranger entre dans la deuxième zone de protection (32), et est conçue pour déclencher la fonction liée à la sécurité si au moins l'un de ces événements se produit.

**2.** Dispositif selon la revendication 1, dans lequel la première zone de protection (30) est définie en fonction d'une zone de travail (48) programmée effectivement de la machine (24).

**3.** Dispositif selon la revendication 1 ou 2, dans lequel la deuxième zone de protection (32) est définie en fonction de la première zone de protection (30) et la différence entre la deuxième et la première distance (52, 50) est une distance de sécurité définie.

**4.** Dispositif selon la revendication 3, dans lequel la distance de sécurité définie est au moins dépendante d'une vitesse d'approche estimée d'un objet étranger se rapprochant de la machine (24), d'un temps d'arrêt de la machine (24) et d'un temps de réaction de l'unité de détection (12).

**5.** Dispositif selon l'une des revendications 1 à 4, dans lequel l'unité de configuration (28) comprend un module d'entrée (36) servant à la définition de la première et/ou de la deuxième zone de protection (30, 32).

**6.** Dispositif selon l'une des revendications 1 à 5, dans lequel des mouvements de la machine (24) sont commandés par une commande de machine (58), et dans lequel l'unité de configuration (28) est couplée à la commande de machine (58) afin de déterminer la première zone de protection (30) sur la base de paramètres qui sont utilisés pour la commande de mouvement de la machine (24).

**7.** Dispositif selon l'une des revendications 1 à 6, dans lequel la fonction liée à la sécurité a pour conséquence un arrêt de la machine (24) ou, si une entrée de la machine (24) dans la première zone de protection (30) est détectée, un ajustement adaptatif de la deuxième zone de protection (32), en particulier de la deuxième distance (52).

**8.** Dispositif selon l'une des revendications 1 à 7, dans lequel la première et la deuxième zone de protection (30, 32) sont des zones de protection tridimensionnelles imaginaires qui entourent au moins partiellement la machine (24).

**9.** Dispositif selon l'une des revendications 1 à 8, dans lequel le système de caméras (16) est un système de caméras (16) multioculaire multicanal redondant.

**10.** Dispositif selon la revendication 9, dans lequel l'unité de détection (12) est conçue pour déterminer une valeur d'éloignement qui est représentative de la position spatiale d'au moins un objet étranger, dans lequel la valeur d'éloignement est déterminée grâce à un procédé de mesure de temps de propagation et/ou grâce à une comparaison stéréoscopique de deux images de caméra.

**11.** Procédé de sécurisation d'une zone de surveillance (14) dans laquelle est disposée une machine (24) fonctionnant de manière automatisée, comprenant les étapes suivantes:

- fourniture d'une unité de détection (12) servant à la surveillance de la zone de surveillance (14), dans lequel l'unité de détection (12) comprend un système de caméras (16) qui est orienté vers la zone de surveillance (14),
- définition d'au moins une première et une deuxième zone de protection (30, 32) virtuelle, dans lequel la première zone de protection (30) est située à une première distance (50) de la machine (24), et la deuxième zone de protection (32) est située à une deuxième distance (52) de la machine (24), laquelle deuxième distance est plus grande que la distance de la première zone de protection (30) à la machine,
- surveillance des deux zones de protection (30, 32) à l'aide de l'unité de détection (12),
- évaluation des images de caméra produites par le système de caméras (16) de manière à détecter si un élément de la machine (24) entre dans la première zone de protection (30) et si un objet étranger entre dans la deuxième zone de protection (32), et
- déclenchement d'une fonction liée à la sécurité s'il est détecté qu'un élément de la machine (24) entre dans la première zone de protection (30) et/ou qu'un objet étranger entre dans la deuxième zone de protection (32).

12. Procédé selon la revendication 11, dans lequel la première zone de protection (30) est définie en fonction d'une zone de travail (48) programmée effectivement de la machine (24), et dans lequel la deuxième zone de protection (32) est définie en fonction de la première zone de protection (30).

13. Procédé selon la revendication 11 ou 12, dans lequel la différence entre la deuxième et la première distance (52, 50) est une distance de sécurité définie qui est au moins dépendante d'une vitesse d'approche estimée d'un objet étranger se rapprochant de la machine (24), d'un temps d'arrêt de la machine (24) et d'un temps de réaction de l'unité de détection (12).

14. Procédé selon l'une des revendications 11 à 13, comprenant en outre les étapes suivantes :

- commande de mouvements de la machine (24) au moyen d'une commande de machine (58),
- détermination de la première zone de protection (30) sur la base de paramètres qui sont utilisés pour la commande de mouvement de la machine (24).

15. Produit-programme informatique comportant un support de données sur lequel est mémorisé un code de programme, lequel est conçu pour mettre en oeuvre un procédé comportant les étapes selon l'une des revendications 11 à 14 si le code de programme est exécuté sur une unité d'évaluation pour un dispositif (10) selon l'une des revendications 1 à 10.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2012223831 A
- DE 102004041821 A1
- EP 1543270 B1
- DE 102007007576 A1
- EP 1635107 A1